# EUROPEAN PATENT APPLICATION

(11) **EP 4 438 563 A1**
(43) Date of publication of application: **02.10.2024**
(21) Application number: 22897251.9
(22) Date of filing: 25.08.2022
(51) Int. Cl.: C01G 53/00, H01M 4/505, H01M 4/525, H01M 10/0525

(54) **WASHING METHOD FOR TERNARY PRECURSOR**

(30) Priority: 26.11.2021 CN 202111420568
(71) Applicant: Hunan Brunp Recycling Technology Co., Ltd., Changsha, Hunan 410600 (CN); Guangdong Brunp Recycling Technology Co., Ltd, Foshan, Guangdong 528137 (CN); Hunan Brunp EV Recycling Co., Ltd., Changsha, Hunan 410600 (CN)
(72) Inventor: ZHAO, Wei, Foshan, Guangdong 528137 (CN); WU, Wenli, Foshan, Guangdong 528137 (CN); CAO, Kaifeng, Foshan, Guangdong 528137 (CN); LIU, Yongqi, Foshan, Guangdong 528137 (CN); GONG, Qinxue, Foshan, Guangdong 528137 (CN); LI, Changdong, Foshan, Guangdong 528137 (CN)
(74) Representative: Studio Torta S.p.A.
(86) International application number: PCT/CN2022/114919
(87) International publication number: WO 2023/093157

(57) **Abstract**

A washing method for a ternary precursor. According to the washing method, by means of multi-stage alcohol leaching, on the premise of ensuring that various properties of a washed material to be dried are identical to those of a material to be dried in a conventional washing process, the moisture contained in the washed material is less, and the washed material is easier to dry. In the washing method for the ternary precursor, a washing procedure in a back-end program of an existing washing procedure is replaced with at least two stages of echelon multistage washing procedures, and the mass fraction of an alcohol solution in a post-washing procedure is higher than that of the alcohol solution in a pre-washing procedure. According to the washing procedures, the basic principle of small amount for multiple times of washing is followed, so that the washing consistency is better, and on the premise of ensuring that the various properties of the washed material to be dried are basically identical to those of the material to be dried in the conventional washing process, the moisture contained in the washed material is less, and the washed material is easier to dry.

## Description

### TECHNICAL FIELD

The present disclosure belongs to the technical field of battery manufacture, and specifically relates to a method for washing a ternary precursor.

### BACKGROUND

Lithium-ion battery cathode material is the decisive factor affecting the electrochemical performance, safety and cost of the whole battery. In the related art, the most widely commercialized lithium-ion battery cathode material is the ternary material of LiNiₓCo_{y}Mn_{1-x-y}O₂.

At present, methods for producing ternary cathode materials mainly include high-temperature solid-phase method, liquid-phase coprecipitation-controlled crystallization method, sol-gel method, spray pyrolysis method and hydrothermal method. At present, liquid-phase coprecipitation-controlled crystallization method is adopted by most enterprises for large-scale production of precursor of the ternary material. This method involves adding a soluble mixture of transition metal salts (nickel, cobalt, manganese or aluminum), a sodium hydroxide solution and a complexing agent into a reaction kettle in parallel flows, and co-precipitating under controlled and suitable preparation process conditions to finally generate nickel-cobalt-manganese hydroxide with certain physical and chemical performance. The nickel-cobalt-manganese hydroxide is then mixed with a lithium salt, and sintered at high temperature to synthesize a nickel-cobalt-manganese ternary material.

In the whole process of synthesizing a ternary material, the synthesis of its precursor, namely nickel cobalt manganese hydroxide, is of great importance. The synthesis of nickel-cobalt-manganese hydroxide mainly includes processes such as a reaction to generate nickel-cobalt-manganese hydroxide precipitate, washing, drying, screening, and batch mixing. On the one hand, the impurity ions such as Na⁺, and SO₄²⁻ can be washed away during the washing section; and on the other hand, the washing section prepares for the subsequent drying process. At present, centrifuges or filter presses are adopted by most enterprises for washing the precursor of ternary material, in which firstly SO₄²⁻ ions in nickel-cobalt-manganese hydroxide precipitate is washed away through alkali washing, and then redundant metallic cations are washed away through water washing to yield a material to be dried. With the current technology, most of the impurity ions can be washed away or controlled within a reasonable range by controlling the pH of the reaction section, the amount of alkali washing and water washing in the washing section, and the washing temperature, whereas the water content in the material to be dried after washing is often overlooked. Even if this is noticed and the process parameters of the washing equipment are continuously adjusted, the water content of the material to be dried is still relatively high. The high water-content in the material to be dried causes difficulties not only in unloading of the washing section, but also in transferring the material to be dried from the washing equipment to the drying equipment, and furthermore causes certain damage to the drying equipment, greatly prolonging the drying time and increasing the drying cost. In recent years, there appears a method in which an alcohol washing step to reduce the water content has been introduced. However, introducing this step results in that the consistency of washing cannot be guaranteed, and BET of the product increases significantly.

### SUMMARY

The present disclosure is directed to solve at least one of the above technical problems of the existing technology. For this purpose, the present disclosure provides a method for washing a ternary precursor. This washing method adopts multi-stage alcohol washing, to ensure that the material to be dried after being washed contains less moisture and is easier to be dried, while its various properties are almost equivalent to those undergoing the conventional washing procedure.

In the first aspect of the present disclosure, there is provided a method for washing a ternary precursor, comprising washing a ternary precursor through an alkali washing procedure and an alcohol washing procedure in sequence, wherein the alcohol washing is performed in at least two stages, and alcohol concentration of an alcohol solution used in the alcohol washing successively increases.

One of technical solutions regarding to the method for washing the ternary precursor of the present invention has at least the following beneficial effects.

In the method for washing the ternary precursor of the present disclosure, the water washing procedure in the back-end procedure of the existing washing procedure is replaced with a gradient multi-stage washing procedure having at least two stages, in which the alcohol solution in post-washing procedure has a higher mass fraction than that in the previous washing procedure. This washing procedure follows the basic principle of low intensity and high frequency in washing, has better washing consistency, and ensures that the material to be dried after washing contains less moisture and is easier to be dried, while its various properties are substantially equivalent to those of the material to be dried undergoing the conventional washing procedure.

Regarding the method for washing the ternary precursor of the present disclosure, although BET of the material to be dried is slightly higher than that of the material to be dried in the conventional washing procedure, owing to the better washing consistency of the gradient multi-stage washing procedure, such increase is very small and can be ignored, as compared with that of the material to be dried which is obtained by performing alcohol washing directly after water washing. In addition, the microstructure of the final ternary precursor product is looser, facilitating in subsequent calcination reactions for preparing ternary material.

The method for washing the ternary precursor of the present disclosure is convenient for industrial application, can greatly shorten the drying time, and produce ternary precursor with better performance.

According to some embodiments of the present disclosure, the washing equipment is one or more of an ultrasonic cleaner, a filter press, a centrifuge, and a suction filter bottle.

According to some embodiments of the present disclosure, the ternary precursor is prepared in a way of adding a soluble mixture of transition metal salts (nickel, cobalt, manganese or aluminum), a sodium hydroxide solution and a complexing agent into a reaction kettle in parallel flows, stirring, and co-precipitating to obtain a ternary precursor.

According to some embodiments of the present disclosure, the ternary precursor is AₓB_{y}C_{z}(OH)₂ or a modification product thereof, where A, B and C are selected from transition metals, 0≤x≤1, 0≤y≤1, 0≤z≤1, and x+y+z=1.

A, B and C cannot be the same element. x, y and z can be the same or different values.

According to some embodiments of the present disclosure, during the preparation of the ternary precursor, the reaction temperature is 40-80°C.

According to some embodiments of the present disclosure, during the preparation of the ternary precursor, the reaction equipment may be a reaction kettle, a reactor, a reaction tank, or a beaker.

According to some embodiments of the present disclosure, during the preparation of the ternary precursor, the stirring frequency is 15 Hz-60 Hz.

According to some embodiments of the present disclosure, during the preparation of the ternary precursor, the reaction time is 3 h-10 h.

According to some embodiments of the present disclosure, during the preparation of the ternary precursor, pH of the coprecipitation is 10.5-11.8.

According to some embodiments of the present disclosure, the reagent used in the alkali washing is selected from the group consisting of lithium hydroxide, sodium hydroxide and a mixture thereof.

According to some embodiments of the present disclosure, the alkali washing is carried out at an alkali concentration of 0.1 mol/L-2 mol/L.

According to some embodiments of the present disclosure, the alkali washing is carried out at a temperature of 45-80°C.

According to some embodiments of the present disclosure, the alkali washing is carried out for a duration of 1 min-60 min.

According to some embodiments of the present disclosure, the alcohol washing uses a reagent including at least one of methanol, ethanol and propanol.

According to some embodiments of the present disclosure, the alcohol washing comprises a first-stage alcohol washing and a second-stage alcohol washing, alcohol in the first-stage alcohol washing has a mass percentage content A in a range of 0<A≤50%, and alcohol in the second-stage alcohol washing has a mass percentage content B in a range of 50<B≤100%.

According to some embodiments of the present disclosure, the first-stage alcohol washing is carried out at a temperature of 40-85°C.

According to some embodiments of the present disclosure, the first-stage alcohol washing is carried out for a duration of 8 min-200 min.

According to some embodiments of the present disclosure, the second-stage alcohol washing is carried out at a temperature of 35-80°C.

According to some embodiments of the present disclosure, the second-stage alcohol washing is carried out for a duration of 1 min-30 min.

According to some embodiments of the present disclosure, the product after the alcohol washing is blown with compressed air.

According to some embodiments of the present disclosure, the compressed air has a pressure of 0.2 MPa-0.9 MPa.

According to some embodiments of the present disclosure, the purging with the compressed air is carried out totally for 0 time-15 times.

According to some embodiments of the present disclosure, the purging with the compressed air is carried out totally for a duration of 5 min-300 min.

According to some embodiments of the present disclosure, the purging with the compressed air is carried out at a temperature of 20-80°C.

According to some embodiments of the present disclosure, after the alcohol washing procedure, the washing method further comprises drying the product to obtain a material to be dried, sieving and mixing the material to be dried to obtain a final product of ternary precursor.

According to some embodiments of the present disclosure, the drying is performed by an equipment selected from the group consisting of a tray dryer, a paddle dryer, a tumble dryer, and an oven.

According to some embodiments of the present disclosure, the drying is carried out at a temperature of 80-140°C.

According to some embodiments of the present disclosure, the drying is carried out for a duration of 1 h-30 h.

According to some embodiments of the present disclosure, the washing method further comprises a water washing procedure between the alkali washing and the alcohol washing.

### BRIEF DESCRIPTION OF DRAWINGS

FIG. 1 is a simplified schematic flow chart of the synthesis of the ternary precursor in Example 1;
FIG. 2 is a schematic flow chart of the washing procedure in Example 1;
FIG. 3 is an SEM image of the material to be dried at 1000x magnification in Example 1;
FIG. 4 is an SEM image of the material to be dried at 1000x magnification in Comparative Example 1;
FIG. 5 is an SEM image of the material to be dried at 50000x magnification in Example 1;
FIG. 6 is an SEM image of the material to be dried at 50000x magnification in Comparative Example 1; and
FIG. 7 is X-ray diffraction detection results of the material to be dried in Example 1 and Comparative Example 1.

### DETAILED DESCRIPTION OF EMBODIMENTS

The following are specific examples of the present disclosure. The technical solutions of the present disclosure will be further described in conjunction with these examples. However, the present invention is not limited to these examples.

### Example 1

In this example, a ternary precursor was synthesized by the following steps.

S1: A soluble mixture of transition metal salts (nickel, cobalt, manganese or aluminum), a sodium hydroxide solution and a complexing agent were added into a reaction kettle in parallel flows, and stirred at a stirring frequency of 40 Hz. The reaction was performed for 4 h while a temperature inside the reaction kettle was controlled at 60°C, and pH was controlled at 10.8-11.3. Then, a ternary precursor was obtained by coprecipitation.

S2: The ternary precursor was removed from mother liquor thereof and transferred into an alkali leaching tank, and leached therein with sodium hydroxide having a concentration of 1.5 mol/L, at a temperature of 50-60°C, with stirring at a frequency of 15 Hz, and for an alkali leaching time of 5 min. The ternary precursor with alkaline solution was transferred to a plate-and-frame filter press through a feeding pipe, firstly washed for 10 min by using 0.2 mol/L of a sodium hydroxide solution at 40-45°C as the alkali washing solution, then washed for 30 min with an aqueous ethanol solution of 10% by mass at 60-65°C, and further washed for 5 min with an aqueous ethanol solution of 85% by mass at 50°C. Next, the ternary precursor was blown by a compressed air of 0.5 MPa at 40°C for 8 min, to obtain a material to be dried.

S3: The material to be dried was transferred through a screw conveyor into a tray dryer, and dried at 120°C for a total drying time of 4 h. Then, the material was sieved and mixed to obtain a final ternary precursor product.

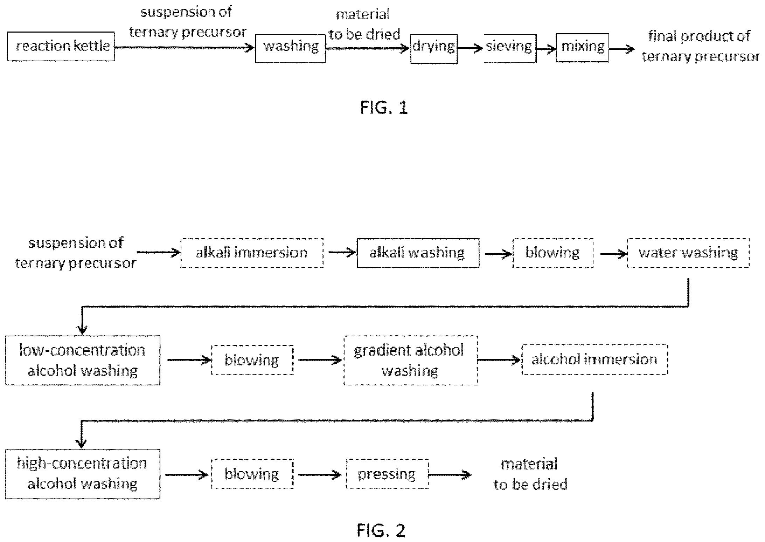

In this example, a simplified schematic flow chart of the synthesis of the ternary precursor is shown in FIG. 1.

The flow chart of washing procedure in S2 is shown in FIG. 2.

### Example 2

In this example, a ternary precursor was synthesized in such a way that S1 and S3 were same as those in Example 1, except that S2 was performed as following.

The ternary precursor was removed from mother liquor thereof and transferred into an alkali leaching tank, and leached therein with sodium hydroxide having a concentration of 1.5 mol/L, at a temperature of 50-60°C, with stirring at a frequency of 15 Hz, and for an alkali leaching time of 5 min. The ternary precursor with alkaline solution was transferred to a plate-and-frame filter press through a feeding pipe, firstly washed for 10 min by using 0.2 mol/L of a sodium hydroxide solution at 40-45°C as the alkali washing solution, then washed for 30 min with an aqueous ethanol solution of 10% by mass at 60-65°C, and further washed for 10 min with an aqueous solution of 50% ethanol by mass at 55-60°C, and further washed for 5 min with an aqueous ethanol solution of 85% by mass at 50°C. Next, the ternary precursor was blown by a compressed air of 0.5 MPa at 40°C for 8 min, to obtain a material to be dried.

### Example 3

In this example, a ternary precursor was synthesized in such a way that S 1 and S3 were same as those in Example 1, except that S2 was performed as following.

The ternary precursor was removed from mother liquor thereof and transferred into an alkali leaching tank, and leached therein with sodium hydroxide having a concentration of 1.5 mol/L, at a temperature of 50-60°C, with stirring at a frequency of 15 Hz, and for an alkali leaching time of 5 min. The ternary precursor with alkaline solution was transferred to a plate-and-frame filter press through a feeding pipe, firstly washed for 10 min by using 0.2 mol/L of a sodium hydroxide solution at 40-45°C as the alkali washing solution, then washed for 30 min with pure water at 60-65°C, further washed for 30 min with an aqueous ethanol solution of 10% by mass at 60-65°C, and furthermore washed for 5 min with an aqueous ethanol solution of 85% by mass at 50°C. Next, the ternary precursor was blown by a compressed air of 0.5 MPa at 40°C for 8 min, to obtain a material to be dried.

### Comparative Example 1

In this Comparative Example, a ternary precursor was synthesized in such a way that S1 and S3 were same as those in Example 1, except that S2 was performed as following.

The ternary precursor was removed from mother liquor thereof and transferred into an alkali leaching tank, and leached therein with sodium hydroxide having a concentration of 1.5 mol/L, at a temperature of 50-60°C, with stirring at a frequency of 15 Hz, and for an alkali leaching time of 5 min. The ternary precursor with alkaline solution was transferred to a plate-and-frame filter press through a feeding pipe, firstly washed for 10 min by using 0.2 mol/L of a sodium hydroxide solution at 40-45°C as the alkali washing solution, and then washed for 30 min with pure water at 60-65°C. Next, the ternary precursor was blown by a compressed air of 0.5 MPa at 40°C for 8 min, to obtain a material to be dried.

### Comparative Example 2

In this Comparative Example, a ternary precursor was synthesized in such a way that S1 and S3 were same as those in Example 1, except that S2 was performed as following.

The ternary precursor was removed from mother liquor thereof and transferred into an alkali leaching tank, and leached therein with sodium hydroxide having a concentration of 1.5 mol/L, at a temperature of 50-60°C, with stirring at a frequency of 15 Hz, and for an alkali leaching time of 5 min. The ternary precursor with alkaline solution was transferred to a plate-and-frame filter press through a feeding pipe, firstly washed for 10 min by using 0.2 mol/L of a sodium hydroxide solution at 40-45°C as the alkali washing solution, then washed for 30 min with pure water at 60-65°C, and further washed for 5 min with an aqueous ethanol solution of 85% by mass at 50°C. Next, the ternary precursor was blown by a compressed air of 0.5 MPa at 40°C for 8 min, to obtain a material to be dried.

### Test Example

The specific surface area (also refers to BET) of the final products and the moisture content of the material to be dried in Examples and Comparative Examples were tested, and the results are shown in Table 1.

**Table 1 Moisture content of the material to be dried obtained and BET data of the final products in Examples and Comparative Examples of the present disclosure**

| Data type | Example 1 | Example 2 | Example 3 | Comparative Example 1 | Comparative Example 2 |
|---|---|---|---|---|---|
| BET(m²/g) of the final product | 10.22 | 10.20 | 10.19 | 10.17 | 10.79 |
| Moisture content (wt%) of the material to be dried | 8.75 | 8.42 | 9.67 | 15.71 | 10.23 |

From the BET data of the final products, it can be seen that, compared with that of Comparative Example 1, the BET of the final products of Comparative Example 2 to which alcohol was directly introduced for washing, greatly increased. In Example 1 and Example 2 to which 2 times alcohol washing and 3 times alcohol washing were respectively introduced in the absence of water washing, the BET of the final products did not increase obviously, which almost can be ignored, demonstrating that using gradient multi-stage alcohol washing will lead to consistent results, and has little effect on the BET of the final product.

From the moisture content of the material to be dried, it can be seen that, compared with Comparative Example 1, after alcohol washing was introduced on the basis of alkali washing and water washing in Comparative Example 2, the moisture content of the material to be dried decreased a little. A multi-stage alcohol washing was introduced in Example 1 and Example 2 to replace water washing, it can be seen that the moisture content of the material to be dried decreased more. From the data of Example 3 and Comparative Example 2, it can be seen that multi-stage alcohol washing after alkali washing and water washing had a better result than that from single-stage alcohol washing, the increase of BET of the final product in Example 3 was little, and the moisture content of the material to be dried in Example 3 was less.

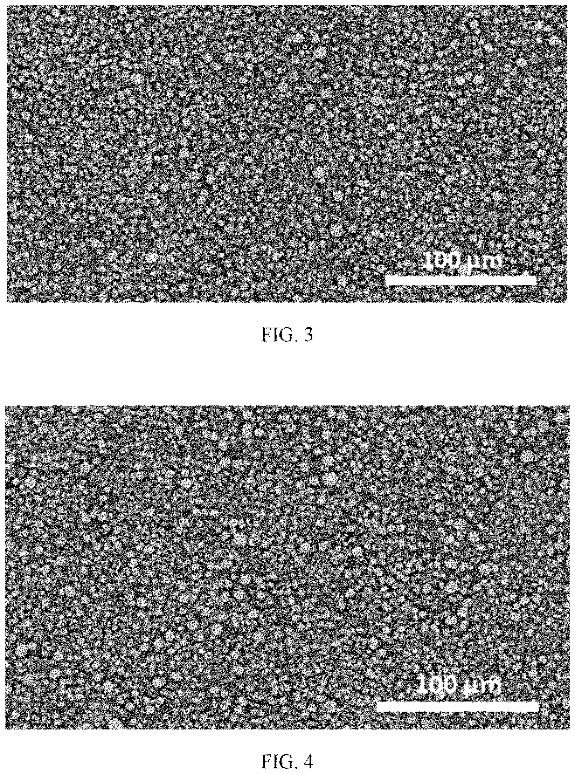

The microscopic morphology of the material to be dried in the preparation process of Example 1 and Comparative Example 1 was observed and shown in FIG. 3 to FIG. 6.

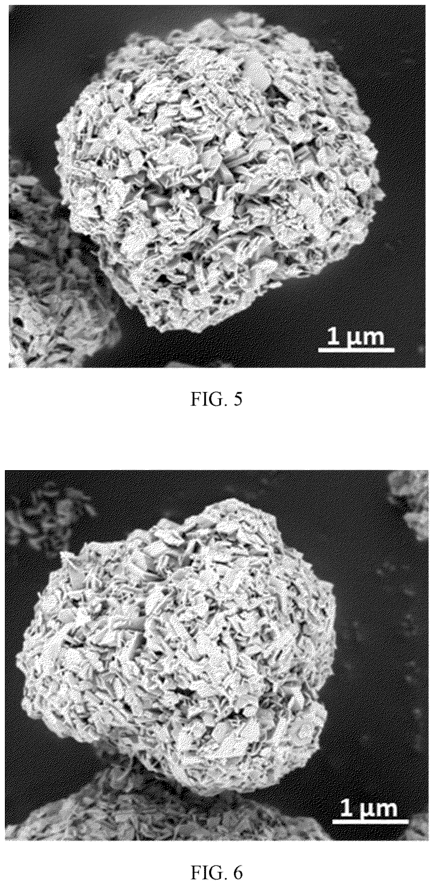

FIG. 3 is an SEM image of the material to be dried at 1000x magnification in Example 1. FIG. 4 is an SEM image of the material to be dried at 1000x magnification in Comparative Example 1. FIG. 5 is an SEM image of the material to be dried at 50000x magnification in Example 1. FIG. 6 is an SEM image of the material to be dried at 50000x magnification in Comparative Example 1.

From FIG. 3 and FIG. 4, it can be seen that the morphology of the two is substantially similar. From FIG. 5 and FIG. 6, it can be seen that the ternary precursor produced in Example 1 has a looser microstructure than that in Comparative Example 1. Such relatively loose structure is more conducive to the subsequent reaction with lithium carbonate or lithium hydroxide to prepare a ternary cathode material, making the reaction more sufficient and complete.

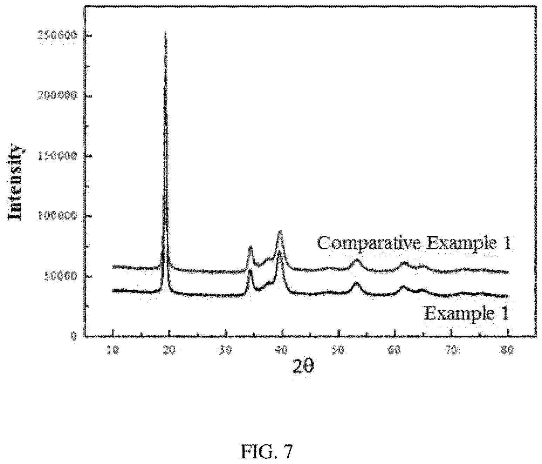

The material to be dried in the preparation process of Example 1 and Comparative Example 1 were analyzed by X-ray powder diffraction, and their patterns were shown in FIG. 7. It can be seen from FIG. 7 that in the XRD patterns of the material to be dried produced in Example 1 and Comparative Example 1, the positions, heights and half-peak widths of each of their diffraction peak are substantially the same, demonstrating that introducing the alcohol washing procedure will not change crystal structure of the produced ternary precursor.

Above, the present invention has been described in detail in conjunction with examples, but it is not limited to the above-mentioned examples. Various changes thereof can be made by those of ordinary skill in the art within the scope of their knowledge and without departing from the spirit of the present invention.

## Claims

1. A method for washing a ternary precursor, comprising washing the ternary precursor through an alkali washing procedure and an alcohol washing procedure in sequence, wherein the alcohol washing is performed in at least two stages, and alcohol concentration of an alcohol solution used in the alcohol washing successively increases.

2. The method for washing the ternary precursor according to claim 1, wherein the ternary precursor is AₓB_{y}C_{z}(OH)₂ or a modification product thereof, wherein A, B and C are selected from transition metals, 0≤x≤1, 0≤y≤1, 0≤z≤1, and x+y+z=1.

3. The method for washing the ternary precursor according to claim 1 or 2, wherein the alcohol used in the alcohol washing is selected from the group consisting of methanol, ethanol, propanol and a mixture thereof.

4. The method for washing the ternary precursor according to claim 1 or 2, wherein the alcohol washing comprises a first-stage alcohol washing and a second-stage alcohol washing, wherein a mass percentage content of alcohol in the first-stage alcohol washing is set as A, 0<A≤50%; and a mass percentage content of alcohol in the second-stage alcohol washing is set as B, 50<B≤100%.

5. The method for washing the ternary precursor according to claim 4, wherein the first-stage alcohol washing is carried out at a temperature of 40°C-85°C.

6. The method for washing the ternary precursor according to claim 5, wherein the first-stage alcohol washing is carried out for a duration of 8 min-200 min.

7. The method for washing the ternary precursor according to claim 4, wherein the second-stage alcohol washing is carried out at a temperature of 35°C-80°C.

8. The method for washing the ternary precursor according to claim 7, wherein the second-stage alcohol washing is carried out for a duration of 1 min-30 min.

9. The method for washing the ternary precursor according to claim 1, after the alcohol washing procedure, further comprising drying a product to obtain a material to be dried, sieving and mixing the material to be dried to obtain a final product of ternary precursor.

10. The method for washing the ternary precursor according to claim 1, further comprising a water washing procedure between the alkali washing and the alcohol washing.
